# EUROPÄISCHE PATENTSCHRIFT

(11) **EP 1 128 163 B1**
(45) Veröffentlichungstag und Bekanntmachung des Hinweises auf die Patenterteilung: **30.10.2013**
(21) Anmeldenummer: 01100813.3
(22) Anmeldetag: 15.01.2001
(51) Int. Cl.: G01C 21/36

(54) **Reiseroutenplanungs- und Reiseroutenführungssystem**
System for planning and guiding a travel route
Système pour planifier et guider un itinéraire routier

(30) Priorität: 01.12.2000 DE 10059746; 23.02.2000 DE 10008464
(43) Veröffentlichungstag der Anmeldung: 29.08.2001
(73) Patentinhaber: Deutsche Telekom AG, 64295 Darmstadt (DE); AUDI AG, 85045 Ingolstadt (DE)
(72) Erfinder: Linnemann, Ludger, Dr., 50823 Köln (DE); Neuerburg, Hans-Jürgen, 53757 Sankt Augustin (DE); Christian Emmerich, 85122 Hitzhofen (DE)
(74) Vertreter: Riebling, Peter

(56) Entgegenhaltungen:
- EP-A- 0 795 835
- EP-A- 0 811 960
- EP-A- 0 871 010
- US-A- 5 504 482

## Beschreibung

### Technisches Gebiet

Die Erfindung betrifft ein Verfahren zur computerunterstützten Reiseroutenplanung und Reiseroutenführung mittels eines Navigationssystemsgemäß dem Oberbegriff des Anspruchs 1.

### Stand der Technik

Vielreisende stehen immer wieder vor der Schwierigkeit, Reiserouten zu finden, die neben den Reiseorten und die dort vorgesehenen Zeiten auch noch die bestmögliche Verkehrsverbindung zu den einzelnen Orten berücksichtigt. Die Aufrechterhaltung der Mobilität von Verkehrsteilnehmern wird bei dem heutigen Verkehrsaufkommen zunehmend schwieriger; sie ist nur durch flexible und intelligente Verkehrstelematikanwendungen möglich. Dies führte dazu, dass sich ein Markt für Verkehrstelematik sehr schnell entwickelt hat und in seinem Umfang stetig zunimmt. Die Verkehrstelematik schafft für den Verkehrsteilnehmer ein Mehr an Sicherheit, Zeitersparnis und zusätzlichen Komfort. Deshalb haben auch die Navigationssysteme für den Einsatz bei Kraftfahrzeugen in der letzten Zeit sehr stark an Attraktivität für den Personenkreis der Vielreisenden gewonnen. Dies wurde nicht zuletzt dadurch gefördert, dass die Kosten der Endgeräte und der Nutzung für die dort zur Anwendung kommenden Telematikdienste ständig sinken. Besonderes Augenmerk der heutigen Verkehrstelematik wird dabei auf die Versorgung der Verkehrsteilnehmer mit aktuellen Verkehrsmeldungen gerichtet, um einen effektiven und optimalen Verkehrsfluss sicherzustellen. Für Verkehrsteilnehmer besteht aber die Schwierigkeit hierbei in der individuellen Versorgung mit nur für sie relevanten Verkehrsmeldungen und Gefahrenhinweisen und ihre Berücksichtigung in der Reiseroutenplanung und der Reiseroutenführung.

Aus der DE 44 29 121 C1 ist ein Navigationssystem für ein Fahrzeug bekannt geworden, welches eine Fahrzeugortungseinrichtung sowie eine Kommunikationseinrichtung enthält, mit deren Hilfe Wegenetzdaten von einer zentralen Leitstelle auf Anforderung des Benutzers abrufbar sind. Es ist ein Verfahren zur Routenanfrage und Zielführung von Fahrzeugen unter Anwendung eines oder mehrerer Ortungsverfahren, eines in Form einzelner Wegesegmente in einer Zentrale elektronisch gespeicherten Wegenetzes und eines in der Zentrale angesiedelten Routenplanungs- und/oder Optimierungsmoduls beschrieben, wobei ein Mobilfunksystem zur Datenübermittlung zwischen Fahrzeug und Zentrale verwendet wird. Auf Benutzeranfrage findet - unter Vorgabe einer Zieladresse - in der Zentrale eine Routenplanung statt, wobei die Routenplanung nach anfrage- und/oder fahrzeug- und/oder benutzerindividuellen Optimierungskriterien erfolgt.

Die DE 41 39 581 A1 betrifft ein Navigationsverfahren für Kraftfahrzeuge, bei dem aus der Vorgabe für Start- und Zielort und der Ermittlung des aktuellen Standorts eine Fahrempfehlung an den Fahrzeugbenutzer abgegeben wird, wobei die Routenpläne von einer zentralen Leitstelle ermittelt werden und über eine Kommunikationseinrichtung an das Fahrzeug übermittelt werden. Der Fahrzeugstandort wird der Zentrale laufend übermittelt und diese passt den Routenvorschlag dem aktuellen Standort laufend an.

Nachteil ist die hohe Belastung des Kommunikationsnetzes.

Die US 5 504 482 A, die den nächstliegenden Stand der Technik darstellt, offenbart entsprechend den Merkmalen des Oberbegriffs des Anspruchs 1 ein Verfahren zur computerunterstützten Reiseroutenplanung und Reisedurchführung. Mit Hilfe vorgegebener Reisedaten und aktuellen Verkehrsmeldungen wird eine erste Reiseroute bestimmt, wobei unter Berücksichtigung aktueller Verkehrsdaten und neuen Eingabedaten des Reisenden die Reiseroutenplanung laufend der Verkehrssituation und den geänderten Reisedaten angepasst wird, und eine geänderte Reiseroute auf einem bekannten Navigationssystem ausgegeben wird. Nach Bestätigung der Reiserouten werden fortlaufend Navigationshinweise sowohl mittels Sprachausgabe als auch visuell ausgegeben.

Ein Verfahren mit ähnlichen Merkmalen ist auch aus EP 0 795 835 A1 bekannt.

### Darstellung der Erfindung

Die Aufgabe der Erfindung liegt darin, ein computerunterstütztes Verfahren zur Verfügung zu stellen, das Vielreisenden eine Reiseroutenplanung und eine Reiseroutendurchführung erleichtert.

Diese Aufgabe wird durch die kennzeichnenden Merkmale des Anspruchs 1 gelöst.

Durch die erfindungsgemäße Lösung wird eine Konvergenz von verfügbaren und neuen Verkehrstelematikdiensten erhalten, die einen zusätzlichen Mehrwert für Verkehrsteilnehmer, insbesondere Vielreisende, schaffen. Dies wird durch drei eigenständige Dienste realisiert: 1. Dynamische Dienstreiseplanung, 2. Personalisierten Info-Push-Dienst und 3. Intelligent Yellow-Pages.

Vorteilhafte Weiterbildungen sind in den Unteransprüchen angegeben.

### Kurze Beschreibung der Zeichnungen

Im nachfolgenden Ausführungsbeispiel wird eine Ausführungsform beschrieben. Hierbei zeigen:
- Figur 1:: Beispiel eines persönlichen Profils eines Kunden (Stammdaten),
- Figur 2:: Beispiel eines Kontaktbuches eines Kunden (Stammdaten),
- Figur 3:: Beispiel eines persönlichen Timers eines Kunden,
- Figur 4:: Beispiel einer Terminliste (Bewegungsdaten-Planung) eines Kunden,
- Figur 5:: Beispiel einer Stationsliste als Arbeitsliste,
- Figur 6:: Beispiel einer Stationsliste als endgültige Version,
- Figur 7:: graphische Darstellung der Stationsliste,
- Figur 8:: Liste von Kommunikationsbeziehungen,
- Figur 9:: Beispiel einer Eingabemaske für die Profilanlage/Fahrtenplanung/ Routeneingabe,
- Figur 10:: Beispiel einer Routenausgabe,
- Figur 11:: Beispiel einer weiteren Routenausgabe,
- Figur 12:: Beispiel eines Systemaufbaus,
- Figur 13:: Beispiel des Aufbaus des Servers,
- Figur 14:: Beispiel für die Diensteplattformen,
- Figur 15:: Auflistung möglicher Dienste,
- Figur 16:: Beispiel einer Stationsliste,
- Figur 17:: Beispiel von möglichen Push-Info-Diensten/Kategorien (Menü-Darstellung),
- Figur 18:: Beispiel einer Stationsliste für die Intelligenten Gelben Seiten,
- Figur 19:: Beispiel einer Ausgabe für den Navigationsmodus und
- Figur 20:: Beispiel einer Ausgabe für den Modus "Tour ändern".

### Ausführungsbeispiel der Erfindung

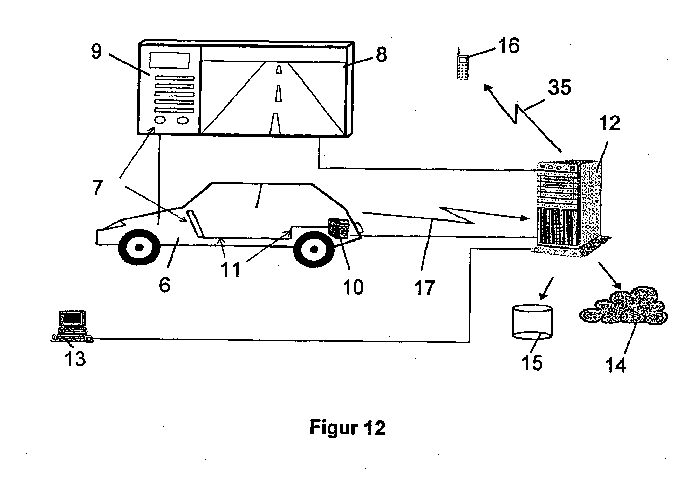

Das Verfahren zur Reiseroutenplanung und Reiseroutenführung wird in der Regel als Dienst von einem Diensteanbieter zur Verfügung gestellt. Die Person, die diesen Dienst in Anspruch nehmen will, - nachfolgend Kunde genannt - muss zuerst mit diesem Dienstesanbieter in Verbindung treten. Dies geschieht, wie man Figur 12 entnehmen kann, mittels einer Verkehrstelematik-Zentrale 12 (VT-Center, Dienstezentrale), wobei der Erstkontakt zwischen Kunden und Zentrale 12 zur Identifizierung und zur Autorisierung des Kunden dient. Um einen derartigen Dienst in Anspruch zu nehmen, benötigt der Vielreisende mehrere Übertragungskanäle z.B. ein entsprechendes Endgerät 7 im Kraftfahrzeug 6, ein Mobiltelefon 16 (Handy) und einen Personal Computer 13 mit Verbindung zu einem Telekommunikationsnetz 31 bzw. zum Internet 14.

Nachfolgend wird die Benutzung im einzelnen beschrieben:

### Dienst: Dynamische Dienstreiseroutenplanung:

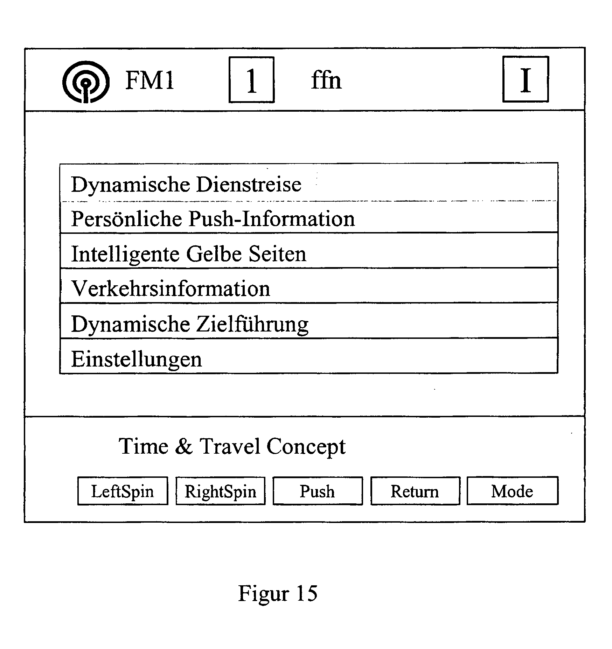

- Der Kunde setzt sich an den PC 13 (Arbeitsplatz) und gibt in seinen Internet-Browser (z.B. MS Explorer) die Adresse des Diensteanbieters z.B. "http:\\www.xxx.de" ein.
- Es erscheint die Startseite mit einer Auswahlliste der möglichen Dienste wie sie beispielhaft in Figur 15 dargestellt ist. Die Startseite enthält eine Diensteanmeldung mit einem Feld für seinen Namen und ein Feld für sein Passwort. Die Seite ist als Dialogseite ausgestaltet, so dass das Passwort geändert werden kann.
- Ein Dienst lässt sich durch Anklicken starten. Mögliche Dienste sind:
- Dynamische Dienstreiseplanung,
- Personalisierte Info-Push-Dienste,
- Intelligent Yellow Pages (Intelligente Gelbe Seiten),
- Verkehrsinformation,
- Dynamische Zielführung.

Von den Diensten muss der Kunde eine Option auswählen und kommt dann in die konkreten Diensteuntermenüs.
- Setzt der Kunde sich in sein Fahrzeug 6, so erscheint auf dem Display 8 des Navigationssystems 7 nach Betätigen der Zündung der Introbildschirm. Eine Identifizierung des Kunden erfolgt über das Endgerät 7 durch Übertragung der Endgeräte-Identifizierung (EG-ID) und der Mobilfunkrufnummer (MSISDN) des Kunden. Nach ca.5 Sek. erscheint das Hauptmenü mit folgenden Untermenüs:
- Dynamische Dienstreiseplanung,
- Personalisierte Info-Push-Dienste,
- Intelligent Yellow Pages (Intelligente Gelbe Seiten),
- Verkehrsinformation,
- Dynamische Zielführung,
- Einstellungen,
- Online-Modus / Offline-Modus.

Die Figur 15 zeigt den möglichen Aufbau eines Hauptmenüs.

Andere Dienste z.B."Notruf" und "Pannenruf" können durch separate Taster im Fahrzeug ausgelöst werden und müssen deshalb nicht auf dem Hauptmenü erscheinen.
■ Die Dienstenutzung kann durch schlichte Anwahl der Service-Nummer des VT-Centers geschehen oder durch Anwählen eines Menüpunktes am Fahrzeug-Endgerät, durch den dann eine Verbindung (Call) zum VT-Center aufgebaut wird. Eine Identifizierung des Teilnehmers kann durch MSISDN und/oder Passwort geschehen. Der Operator in der VT-Zentrale kann anhand der MSISDN den Anrufer identifizieren und deshalb auch persönlich begrüßen.

### Dynamische Dienstreiseplanung

Der Dienst "Dynamische Dienstreiseplanung" verbindet die Zeitplanung einer Person mit ihrer Fahrtenplanung, die sie zu den Terminen bringt. Dabei werden Zeitpunkte für externe Besprechungen aus dem Terminplaner und Orte aus der Adressdatenbank als Eingangsinformationen für die Fahrtenplanung benutzt. Der Dienst koordiniert die handelnde Person, (geplante und ungeplante) externe Partner und Support-Kräfte aus dem Büro durch entsprechende Berechnungen und nachfolgende Mitteilungen. Eine Pre- und On-Trip-Planung verbunden mit einer dynamischen Routenführung sollen zur bestmöglichen Zeitausnutzung beitragen.

Der Produktnutzen für diesen Dienst besteht in den folgenden Punkten:
- Pre-Trip Planung,
- Lösen des Travelling-Sales-Man (TSM) Problems und Einplanen von unbestimmten Terminen. Dies bedeutet weniger Fahrstrecke und mehr Zeit für die Kunden.
- Dabei Einbeziehung der verschiedensten Randbedingungen (z.B. Öffnungszeiten),
- Weckruf vor Fahrtbeginn und in Stationen,
- Dynamische Routenführung,
- Jederzeitige aktuelle Agenda,
- Veränderungen der Agenda sind möglich.

Beispiel 1:In vorliegendem Beispiel soll ein Kunde eine Tour mit 5 Stationen planen, ausgehend von und endend an seinem Büro. Er plant dies am frühen Morgen und hat so noch etwas Zeit, vor Reisebeginn zu arbeiten. Es erfolgt dann ein "Weckruf", wenn er losfahren muss. Er gibt die Planung selber in seinen PC ein und benötigt so keine Unterstützung seines Sekretariats oder des VT-Centers.

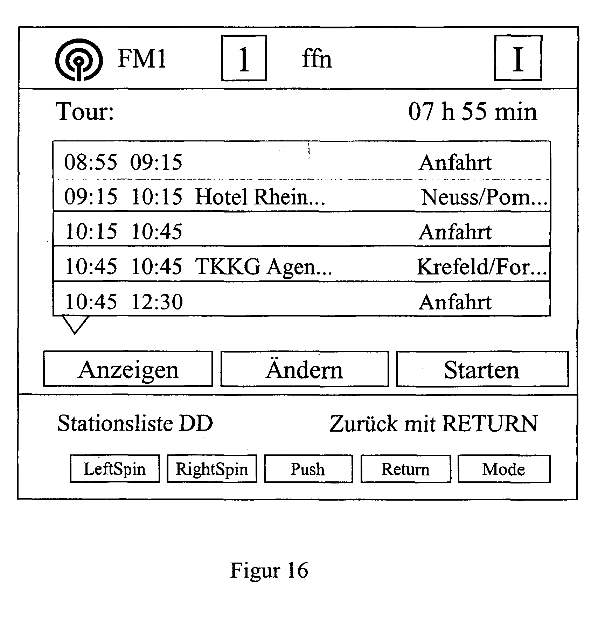

Die fünf Stationen sind geographisch so verteilt, dass die Lösung des unlimitierten TSM-Problems (TMS: Travelling Sales Man) nicht auf den ersten Blick evident ist. Die Lösung dieses Problems wird grafisch veranschaulicht. Durch eine Limitation wird die endgültig Lösung noch einmal leicht verändert werden. Dadurch wird die Komplexität des Planungsproblems veranschaulicht, bei dem der Kunde das VT-Center unterstützt Es werden keine Terminkollisionen gezeigt. Es wird dem Kunden eine Stationsliste mit geplanten Anfahrts-, Ankunfts- und Abfahrtszeiten an den jeweiligen Stationen angezeigt, wie es in Figur 16 beispielhaft dargestellt ist.

Der Weckruf für den Antritt der Reise bzw. für die Weiterfahrt zur nächsten Station kann früher als erwartet kommen, denn dies ist eine dynamische Komponente, die von der Verkehrslage abhängt. Beispielsweise fährt der Kunde die Station 1 planmäßig an. Auf dem Weg zu Station 2 teilt ihm das VT-Center per SMS und Voice-Server mit, dass sich seine Streckenführung geändert hat, das auf der ursprünglichen Route ein Stau entstanden ist und er umgeleitet werden kann. Danach fährt er planmäßig zu Station 3. Dort erhält er nach einer gewissen Zeit seinen entsprechenden Weckruf. Beim Verlassen von Station 3 teilt der Kunde aus dem stehenden Fahrzeug heraus dem VT-Center mit, dass er gerne noch einen sechsten Termin (Status: initiativ) erledigen will. Das VT-Center berechnet die Route neu und schlägt vor, Station 6 zwischen der alten Station 4 und 5 anzufahren. Der Kunde erhält eine Anrufliste mit dem Namen der Kontaktperson in der neu hinzugekommenen Station und benachrichtigt ihn über sein Kommen. Gleichzeitig verschickt das VT-Center eine E-Mail an das Büro des letzten Kunden, um dort die neue Ankunftszeit mitzuteilen. Anschließend fährt der Kunde die verbleibenden Stationen 4, 5, 6 an, bevor er schließlich zurück in sein Büro fährt.

Ein anderes Beispiel für "Dynamische Dienstreiseplanung" (FS) ist:
"Kauf/Renovierung von Gutshöfen & Mühlen im Bayrischen Wald",
   - Flughafenanbindung (Anfahrt Pkw & Flug/Verspätung),
   - Termin mit Bauamt / Katasteramt / Hypo-Banken / Bauzulieferer / Bauherr / Handwerker / Innenarchitekt,
   - Privattermin mit Ehefrau / Freundin / Schwester zum Essen etc.,
   - Interner Termin Personaleinstellung Bauzeichner / Sekretärin.

Die Vorbereitung der Routenplanung erfolgt im Dialog mit dem Diensteanbieter bzw. dem VT-Center.

### Schritt 1: Routeneingabe

Wenn ein Kunde am PC (Arbeitsplatz) im Hauptmenü den Button für "Dynamische Dienstreiseplanung" angeklickt hat, erscheint die "Startseite des Dienstes". Vor der weiteren Dienstenutzung muss ein Kunde allerdings sein persönliches Profil und ein Kontaktbuch einmalig anlegt haben. Weiterhin muss er einen persönlichen Timer pflegen. Die beiden Datenbestände werden lokal beim Kunden gehalten und gepflegt. Bei einer Diensteanfrage werden sie an das VT-Center übermittelt.

Die Startseite enthält in der Regel die folgenden Buttons:
- "Persönliches Profil bearbeiten": Profil öffnet sich und ist dann editierbar.
- "Zeitbudget": Eingabe der zur Verfügung stehenden Zeit und des Startzeitpunktes.
- "Tourbuch öffnen": Öffnet das Tourbuch, in dem abgespeicherte Routen hinterlegt sind.
- "Terminliste erstellen": Erstellt eine Terminliste. Es erscheint eine neue Bildschirmmaske.
- "Zurück": Führt zu einem Rücksprung ins Hauptmenü.

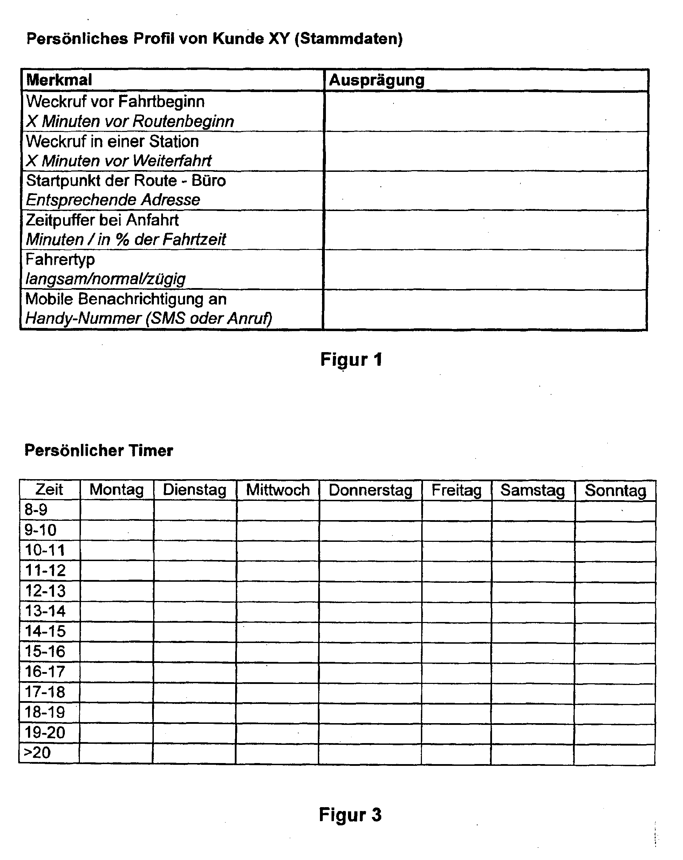

Nachfolgend sind diese Verzeichnisse im einzelnen dargestellt. Die Figur 1 zeigt das Verzeichnis "Persönliches Profil". Alle Felder sind editierbar außer der ersten Zeile und Spalte. Sie sind weitestgehend selbsterklärend und spiegeln in gewisser Weise wieder, unter welchen zeitlichen Zwängen ein Kunde steht bzw. in welcher Art und Weise er mit Zeit umgeht.

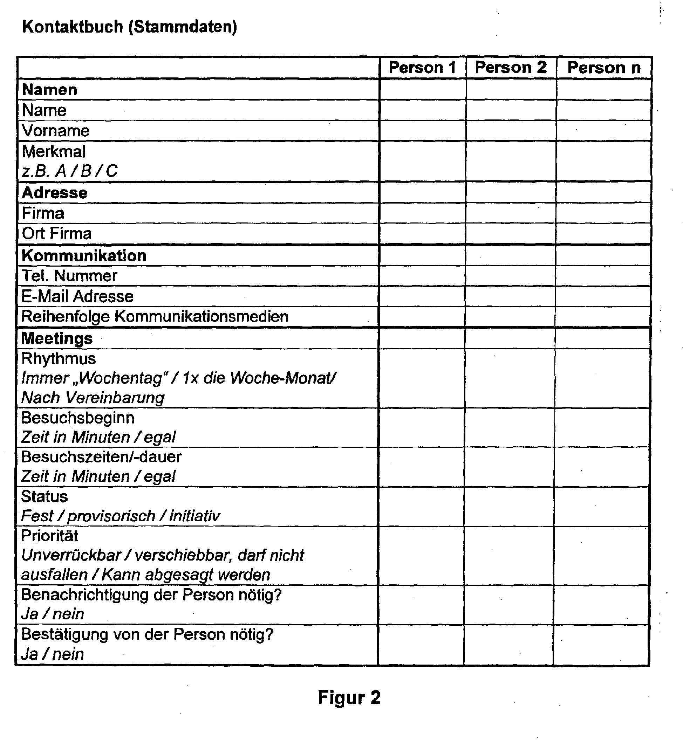

Das in Figur 2 dargestellte Kontaktbuch fasst Personen, die geographischen Orte und die Charakter von Meetings mit diesen Personen zusammen. Insbesondere ist hier die Gelegenheit gegeben, unbestimmte Termine in der Terminplanung zu berücksichtigen. Letzteres soll insbesondere Außendienmitarbeiter/Handlungsreisenden die Möglichkeit geben, einen Besuchsrhythmus (1 x in vier Wochen) für diese Personen z.B. Kunden einzuplanen.

Figur 3 zeigt einen ganz normalen Terminkalender, in dem der Kunde seine Einträge gemäß den getroffenen Verabredungen macht. Der Kunde kann auch eine bestimmte Tour erstellen ("Tour erstellen"). Nach dem Anklicken der Option folgt die Benennung einer Tour und anschließend daran die Eingabe der Personen durch Anklicken im Kontaktbuch. Diese Tour wird dann im Tourbuch gespeichert. Dementsprechend gibt es auch die Option "Tourbuch öffnen".

### Schritt 2: Terminliste erstellen

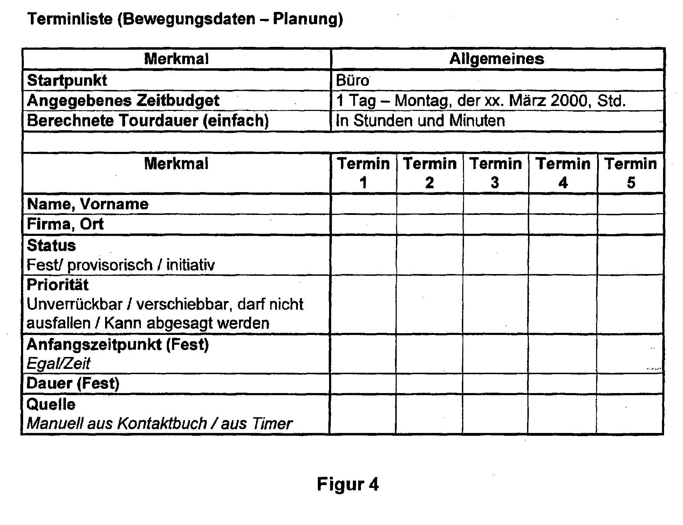

■ Mit dem persönlichen Profil, der Kontaktliste, und dem Timer kann die Reiseplanung am PC (Arbeitsplatz) beginnen. Dazu wird zuerst eine Liste mit beabsichtigten Besuchsterminen ("Terminliste") von zu besuchenden Personen, Kunden, erstellt. Die Liste erhält aus den folgenden Quellen die notwendigen Einträge:
   - Aus dem Timer;
   - Initiative oder reguläre Termine durch Anklicken einer Person im Kontaktbuch.
■ Die Termin-Liste erstellt der Kunde durch Anklicken des Buttons "Terminliste erstellen". Zuvor muss der Kunde noch in entsprechenden Eingabefeldern eintragen, über welchen Zeitraum in Stunden und Tagen sich die Tourplanung erstrecken soll.
■ Während der Berechnung erscheint auf dem Bildschirm eine "Sanduhr" und der Hinweis "Terminliste wird erstellt". Danach gibt das VT-Center eine Terminliste gemäß Figur 4 aus.
■ Diese Terminliste wird schon mit Hinblick auf die Tourplanung verschiedenen Konsistenzprüfungen unterzogen.
   - Es wird überprüft, ob die Summe aller n Termine plus n+1 Anfahrten (z.B. Default 20 Minuten) bereits größer als das zur Verfügung stehende Zeitbudget ist. Wenn ja, erfolgt eine entsprechende Fehlermeldung nach Anklicken von "Terminliste erstellen" mit dem Hinweis, einzelne Termine zu löschen oder sein Zeitbudget zu erhöhen. Der Kunde kann dann nicht weiter zur Stationsliste gehen. Als Ausgabe nach Ersterstellung oder jeder Fehlermeldung erhält er eine Terminliste, die defaultmäßig wie folgt geordnet ist: Priorität, zeitliche Abfolge, Status. Wahlweise kann er auch durch Anklicken des Schalters "Sortierung ändern" nach Status, Priorität oder zeitlicher Abfolge sortieren. Eine Sortierung nach Geographie ist an dieser Stelle nicht möglich.
   - Wenn die erste Prüfung erfolgreich durchlaufen wurde, so wird geprüft, ob die ausgewählten Termine mit einem einfachen TSM-Algorithmus gelöst werden können. Diese Lösung sollte das letztendliche Ziel der Tourenplanung sein, schont es doch die Ressourcen "Fahrtstrecke des Fahrzeugs" und die "Einsatzdauer des Außendienstlers (Kunden)". Dadurch werden mehr Besuche ermöglicht. Deshalb sollte z.B. sparsam mit der Option "unverrückbar" umgegangen werden. Damit ist eine Lösung gemeint, die nicht die Anfangszeiten von Terminen berücksichtigt. Wenn diese Lösung mehr Zeit benötigt als im Zeitbudget angegeben wurde, so erfolgt eine entsprechende Fehlermeldung mit dem Hinweis, einzelne Termine zu löschen oder sein Zeitbudget zu erhöhen. Der Kunde kann dann nicht weiter zur Stationsliste gehen. Als Ausgabe der Ersterstellung oder nach jeder Fehlermeldung erhält er eine Terminliste, die defaultmäßig nach der Abfolge gemäß der TSM-Lösung geographisch geordnet ist. Wahlweise kann er auch durch Anklicken des Schalters "Sortierung ändern" nach "Priorität" und "Status" sortieren.
   - Nach jeder Überprüfung muss der Kunde erneut "Terminliste erstellen" anklicken, bis er keine Fehlermeldung mehr erhält. Erst dann ist der Button "Stationsliste erstellen" aktiv.
■ Die Terminliste soll einem Kunden einen ersten Überblick über die für einen Tag anstehenden Termine geben. Dies ist nicht direkt aus dem Timer evident, da ja noch Termine aus dem Kontaktbuch hinzukommen. Die Terminliste kann der Kunde im Rahmen der Konsistenzprüfungen bearbeiten, mit den folgenden Optionen:
   - Button: "Terminliste bearbeiten"
      a. Termine löschen durch Markieren und "Delete"
      b. Termin ändern durch Editieren direkt in den Feldern
   - Button: "Termin hinzufügen."
      Es öffnet sich das Kontaktbuch. Anklicken von Personen im Kontaktbuch, wo alle anderen aktiven Termine aus der Terminliste weiterhin farbig unterlegt sind.
   - Button: "Terminliste erstellen"
      Führt zur Neuberechnung der Terminliste nach vorherigem Editieren.
   - Button: "Stationsliste erstellen"
      Das VT-Center berechnet einen Vorschlag für eine Stationsliste.
   - Button: "Zurück"
      Rückkehr zum Intro-Menü des Dienstes

### Schritt 3: Routenberechnung

Bei der Erstellung einer Stationsliste wird die folgende Verteilungs-Strategie verfolgt, die in ähnlicher Form bei Terminänderungen während einer Tour später zum Tragen kommt:
a) Verteile alle Termine mit der Priorität "unverrückbar". Wenn dies nicht geht, so liefere eine Fehlermeldung, wenn es geht, so gehe zu Schritt b).
b) Verteile alle Termine mit der Priorität "verschiebbar". Erst die mit dem Status "fest", dann "provisorisch" dann "initiativ". Wenn dies nicht geht, so liefere eine Fehlermeldung, wenn es geht, so gehe zu Schritt c).
c) Verteile alle Termine mit der Priorität "absagbar". Erst die mit dem Status "fest", dann "provisorisch" dann "initiativ". Wenn dies nicht geht, so liefere eine Fehlermeldung, wenn es geht, so lasse die Erstellung einer Stationsliste zu.

Bei einer Fehlermeldung bei diesem Ablauf soll der Termin, aufgrund dessen es nicht funktioniert, farbig angezeigt werden.

### Schritt 4: Routenausgabe

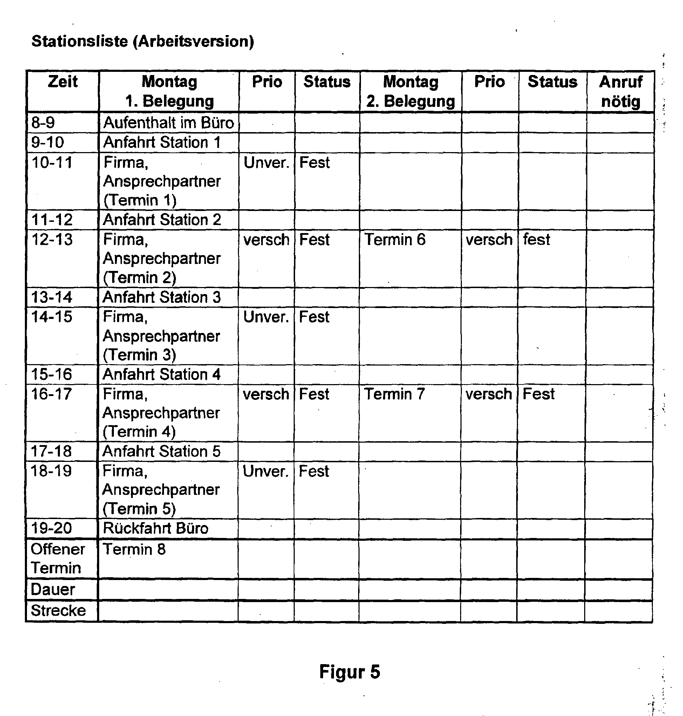

Nach Berechnung erscheint auf dem PC (Arbeitsplatz) die Stationsliste, wie es in Figur 5 dargestellt ist. Die Stationsliste betont im Gegensatz zur Terminliste die geographische Verteilung der Termine. Ein Termin findet in einer Station statt. In 5 Minutenschritten sind die Termine eintragbar. Die letzte Spalte wird unterdrückt, bis die Liste endgültig ist. Hier hat der Kunde die Optionen:
- "Stationsliste bearbeiten" durch Löschen mit Delete und Eingabe in die Felder,
- Button: Stationsliste anzeigen",
- Button: "Stationsliste bestätigen, Dienst starten",
- Button: "Zurück"; Rücksprung ins vorherige Menü (Terminliste).

Auch wenn die Konsistenzprüfungen der vorherigen Runde durchlaufen worden sind, kann es noch zu einer nicht-eindeutigen Stationsliste kommen, weil es ja nicht nur das einfache TSM-, sondern das limitierte TSM-Problem zu lösen gilt. Diese Doppel- vielleicht gar Mehrfachbelegung wird nach der oben angeführten Verteilungs-Strategie vorgenommen. Die Termine ohne feste Anfangszeit werden in eine Rubrik "Offene Termine" übernommen. Aus dieser Liste muss der Kunde nun eine Auswahl treffen, um zu einer eindeutigen Stationsliste zu kommen. Insbesondere sollte von der Möglichkeit Gebrauch gemacht werden, dass einige Termine verschiebbar und andere absagbar sind. Dies geschieht indem er einige Termin löscht.

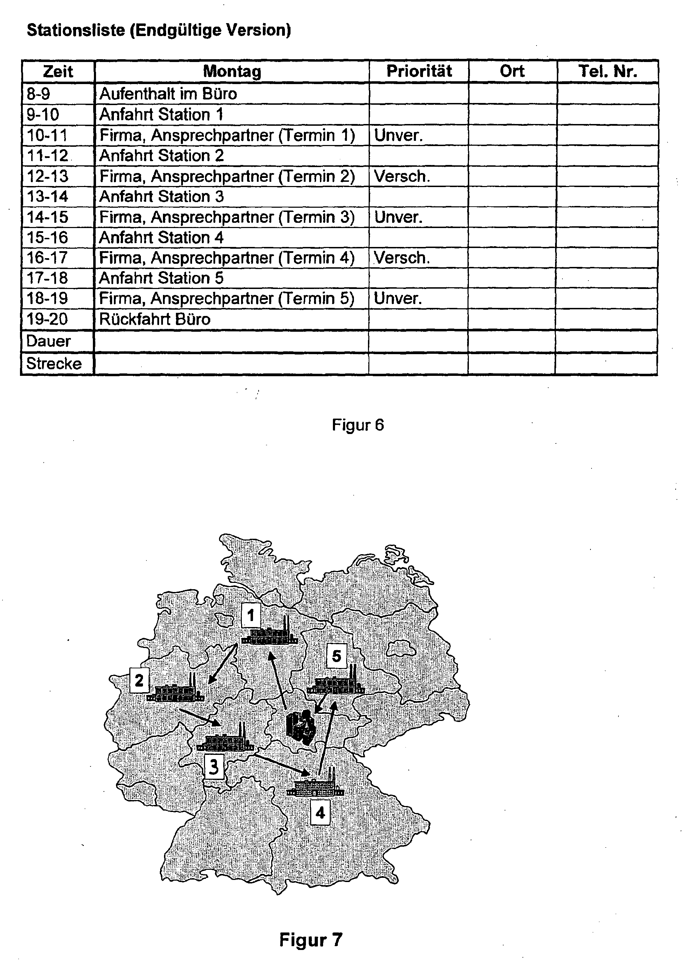

Nach Abschluss der Bearbeitung ergibt sich eine konsistente und ausführbare Stationsliste wie dies beispielhaft in Figur 6 dargestellt ist.

Hier hat der Kunde die Optionen:
- Button: "Stationsliste anzeigen" Es erfolgt eine graphische Darstellung der Stationen auf einer Karte gemäss Figur 7;
- Button: "Stationsliste bestätigen, Dienst starten";
- Button: "Zurück": Rücksprung ins vorherige Menü (Arbeitsversion der Stationsliste).

### Schritt 5: Routenbestätigung

Wenn er den Button "Stationsliste bestätigen" wählt, so wird nachfolgend auf einem neuen Bildschirm eingeblendet, dass die Tour um XX.XX h beginnen und er über sein Handy benachrichtigt werden wird. Nach erneuter Bestätigung gelangt man wieder ins Hauptmenü.

### Schritt 6: Routenbeginn

5 Minuten vor der Abfahrt erhält der Kunde einen Anruf vom Voice-Server des VT-Centers auf sein Handy (Weckruf):
"Hallo! Hier ist das VT-Center! Die von Ihnen bestellte Dienstreise beginnt in 5 Minuten! Bitte begeben Sie sich auf den Weg zu Ihrem Fahrzeug, wir werden Sie dann zu Ihren Terminen leiten".

### Schritt 7: Dynamische Routenführung

Nach dem Einsteigen in das Fahrzeug schaltet der Kunde das Navigationssystem an. Durch Auswahl der Option "Dynamische Dienstreiseplanung" im Hauptmenü erhält er das folgende Menü:
- Anzeige: "Stationsliste" gemäss Figur 5;
- Button: "Stationsliste anzeigen" gemäss Figur 7;
- Button: "Tour starten" und nachfolgender Rücksprung ins Hauptmenü;
- Button: "Tour ändern"; (vgl. nachfolgenden Abschnitt "Routenänderung);
- Button: "Tour abbrechen", Dienst wird beendet, Rücksprung ins Hauptmenü.

Unterwegs gibt das Navigationssystem die bekannten Manöverbefehle aus, z.B.:
"Demnächst rechts/links abbiegen"
"Jetzt rechts/links abbiegen"
"Dem Straßenverlauf längere Zeit folgen"
"Im Kreisverkehr die dritte Ausfahrt nehmen"

Diese "Voice-Befehle" werden noch von einer entsprechenden Anzeige im Pfeilmodus auf dem Display begleitet.

Bei einer Verkehrsstörung ertönt z.B. das Voice-Kommando:
"Hallo! Auf Ihrer Strecke ist (von Fernziel 1 und Fernziel 2, zwischen Anschlussstelle 1 und Anschlussstelle 2) ein Stau von 5 km Länge. Wir haben für Sie eine Umfahrung berechnet, die 10km länger ist, Ihnen aber 20 Minuten Zeit einspart. Mächte Sie diese befahren?"

Auf dem Display erscheint der folgende Text:
"5 km Stau (von Fernziel 1 und Fernziel 2, zwischen Anschlussstelle 1 und Anschlussstelle 2). Umfahrung +10km, Zeitersparnis 20 Minuten."

Darunter befindet sich das folgende Menü:
- Button: "Befahren der Alternativroute";
- Button: "Verbleiben auf bisheriger Route".

### Schritt 8: Benachrichtigungen in Stationen

Wenn der Kunde sich in einem Meeting befindet, so erhält er per SMS eine Benachrichtigung, dass er in 10 Minuten in sein Fahrzeug steigen muss, um den nächsten Termin pünktlich zu erreichen. Diese hat den Text:
"Bitte begeben Sie sich in 10 Minuten zu Ihrem Fahrzeug!"

### Schritt 9: Routenänderungen

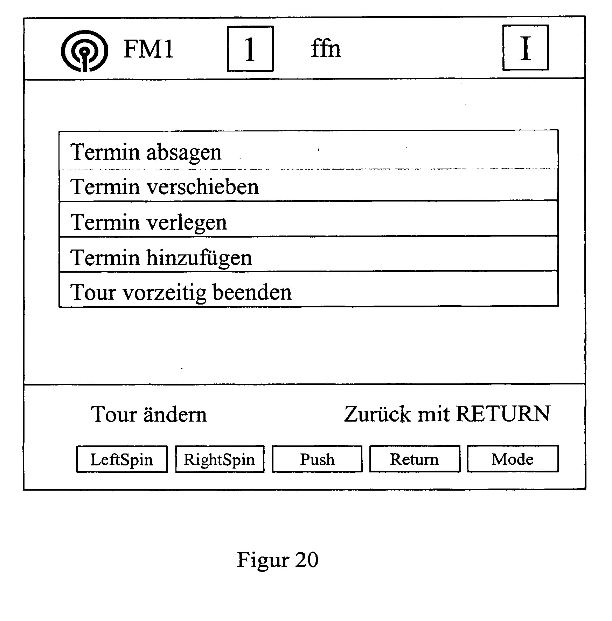

Der Kunde möchte einen neuen Termin in die bestehende Route aufnehmen. Dazu ruft er den Operator mit dem Button "Tour ändern" an, um ihm seinen Wunsch im Dialog unterstützt vom Endgerät, nachfolgend mit EG abgekürzt, mitzuteilen. Vor und während des Gespräches erscheinen auf dem Bildschirm folgende Texte (vgl. Figur 20):
- Kunde: Auf dem Dienstebildschirm sind folgende Buttons zu sehen:
   a. Termin absagen
   b. Termin verschieben
   c. Termin verlegen
   d. Termin hinzufügen
   Der Kunde klickt auf Punkt d. Das EG baut einen Sprachcall zum VT-Center auf.
- VT-Center: "Termin hinzufügen ist in Bearbeitung"
- Kunde:
- VT-Center: "Es erscheint die neue Stationsliste"

Der dazugehörige Dialog lautet:
- VT-Center: "Guten Tag! Sie möchten einen Termin in Ihrer Dienstreise hinzufügen?"
- Kunde: "Ja, Guten Tag. Ich möchte noch Herrn Soundso beim Firma XY für eine Stunde besuchen, Anfangszeit ist egal. Könnten Sie bitte überprüfen, wie sich das in meine Route einbauen lässt?
- VT-Center: "Einen Moment bitte. Ein Besuch bei der Firma XY lässt sich ganz gut nach dem Besuch der Firma AB einbauen. Mit einer Verschiebung des Besuchs bei Firma LM würde das Ganze aufgehen. Ist das in Ordnung für Sie?"
- Kunde: "Ja super. Bitte verändern Sie in diesem Sinne meine Route!"
- VT-Center: "Ich schicke eine E-Mail an Herrn Dingsda in Station 6 und Ihnen die neue Stationsliste ins Fahrzeug zusammen mit der Telefonnummer von Herrn Soundso, den Sie ja noch, wie angegeben zur Anmeldung anrufen möchten. Wir wünschen Ihnen noch eine gute Fahrt."

### Schritt 10: Routenende

Wenn sich die angefragte Route dem Ende nähert und der Kunde sich seinem letzten Zielort nähert, so erscheint folgendes Voice-Kommando und die Anzeige:
"In Kürze erreichen Sie den Endpunkt Ihrer Tour. Damit ist der Dienst beendet. Wir bedanken uns!"

Solange der Dienst aktiv ist, gibt es im Display einen Button "Dienst beenden". Bei Auslösen erfolgt die Nachfrage "Sind Sie sicher, den Dienst zu beenden?", was mit einer erneuten Bestätigung quittiert werden muss. Weiterhin wird der Dienst durch Abschalten des Fahrzeugs deaktiviert.

### Kommunikationsbeziehungen

Folgende Kommunikationsteilnehmer sind bei den Diensten zu berücksichtigen:
- Kunde im Auto 6 mit VT-EG 7;
- Kunde außerhalb des Autos 6 mit Handy 16;
- Büro des Kunden, aufgeteilt in eigenen und Sekretariats Arbeitsplatz;
- VT-Center 12 mit Operator und automatischer (SMS, Voice-Server) Diensteerbringung;
- Mehrere Externe Partner.

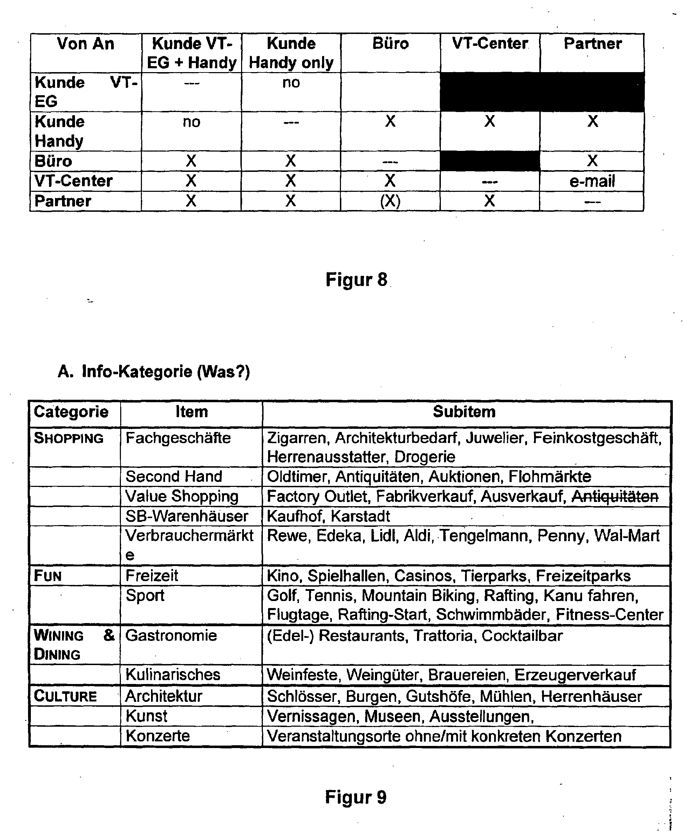

Figur 8 zeigt eine Liste der möglichen Kommunikationsbeziehungen.

### Dienst: Personalisierte Info-Push-Dienste

### Beschreibung

Dieser Dienst ermöglicht es dem Kunden, situationsbezogene Informationen über sein Umfeld (z.B. diverse Points of Interest- nachfolgend mit POI abgekürzt-, Geschäfte, Aktivitäten) zu erhalten gemäß den von ihm geäußerten Interessen. Nach Informationserhalt kann er mit diesem POI in Kontakt treten und sich dort unter Berücksichtigung der aktuellen Verkehrslage hinführen lassen.

Der Produktnutzen für diesen Dienst besteht in den folgenden Punkten:
- Bescheidwissen in unbekanntem Terrain,
- Filterung der Informationen gemäß der persönlichen Vorlieben,
- Fallweise Nutzung bei wenigen Anmeldungen,
- Mögliche Verbindung zur Zielführung.

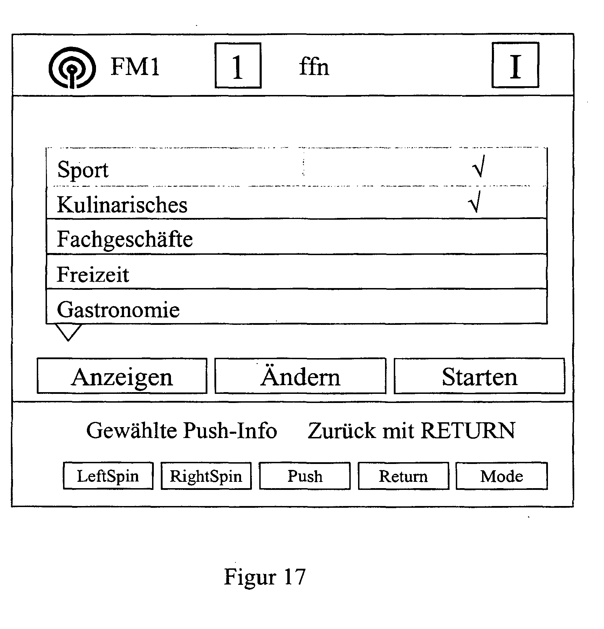

Das Hauptmenü für diesen Dienst, so wie es auf dem Bildschirm des PC oder dem Navigationsendgerät erscheint, ist in Figur 17 dargestellt.

Beispiel: Ein Kunde möchte diesen Dienst nutzen. Er meldet sich und sein Profil deshalb im VT-Center an. Dabei definiert er zuerst mehrere Themen fest, die ihn interessieren z.B.: "historische Stätten", "Schwimmbäder".

Der Kunde befindet sich eine Woche später wieder auf der gleichen Tour, wie sie bei der dynamischen Dienstreiseplanung schon dargestellt worden ist. Die Termine werden nicht mehr im einzelnen angezeigt, sondern nur noch der geographische Ort der Stationen. Zwischen den Stationen erhält er bei genügender Annäherung eine Information über die von ihm eingestellten Themen. Vor Fahrtbeginn wählt er für ihn interessante POI-Kategorien aus.

Dies soll an drei Beispielen dargestellt werden: Beim ersten Beispiel nimmt er nur den POI zur Kenntnis, beim zweiten POI ruft er an und merkt ihn sich für das Wochenende. Beim dritten schließlich ruft er an und fährt hin. Die VT-Center soll den letzten Termin der Dienstreise absagen.

Zusätzlich soll noch auf einen Stau hingewiesen werden, um den ihn das VT-Center herumlotst.

### Schritt 1: Profilanlage /Fahrtenplanung/Routeneingabe

Die Profileingabe erfolgt am PC im Zusammenhang mit einer dynamischen Dienstreiseplanung. Der Kunde klickt den Button "personalisierte Info-Push-Dienste" im Hauptmenü, worauf eine Maske mit den Feldern gemäß Figur 9 erscheint.

### Erläuterung der Optionen:

### A. Info-Kategorie (Was?):

Für jede der Kategorien sind im Gebiet um die Dynamische Dienstreise z.B. im Großraum Düsseldorf/Duisburg, verschiedene Einträge vorhanden. Die Daten für die Einträge werden mittels des Perso/Push-Dienst übertragen, wenn die Position in der Nähe seiner Fahrtroute liegt. Eine Datenbank z. B aus einer Annoncenzeitschrift liefert die Geo-Daten aller Einträge, auf die die Suchkriterien passen. Der Kunde kann verschiedene Kategorien einzeln oder gleichzeitig durch Anklicken angeben. Wenn man eine Rubrik ein zweites Mal anklickt, so wird das Feld deaktiviert. Es können hierbei entweder alle drei Spalten oder nur die ersten beiden Spalten angezeigt werden. Die Daten der Kategorie "Shopping" werden durch eine Umwidmung der Daten aus dem Kontaktbuch erzeugt.

### B. Tourbuch öffnen (Wo?)

Hier soll sich das Tourbuch aus dem Dienst "Dynamische Dienstreiseplanung" öffnen. Darin sind die Standardtouren sowie eine zuvor gebuchte und jetzt aktive Route enthalten.

### C. POI-Entfernung (Korridorbreite) (Wo?)

Hier sollen die aktiven Felder 5, 10, 15 km stehen. Dies bezeichnet die Breite des Suchkorridors, der um die Route gelegt wird.

### D. Startzeitpunkt (Wann?)

Hier kann der Kunde zwischen den folgenden Optionen wählen:
- sofort
- Datum, Uhrzeit für Beginn und Ende sowie Priorität (mit entsprechender Eingabemaske)
- wie DDP (dies koppelt den Diensteshart an eine DDP=Dynamische Dienstreise).

Unter dieser Maske befinden sich das folgende Menü:
- Button: "Tour berechnen" (vgl. nachfolgend "Routenberechnung");
- Button: "Zurück"; führt zu einem Rücksprung zum Hauptmenü.

### Schritt 2: Routenberechnung

- Bei einer definierten Route (z.B. bei einer übernommenen Tour aus dem Tourbuch) berechnet die Zentrale in einem parametrierbaren Korridor von X Kilometern um die Route, welche der gewünschten POIs sich darin befinden. Die Übernahme einer Route bezieht sich auf die dort bezeichneten Stationen. Die Verbindungslinien dazwischen können sich aufgrund der aktuellen Verkehrslage ändern.
- Bei einer nicht definierten Route kann das VT-Center vor Fahrtbeginn nichts berechnen. Sie kann den Kunden nur zur baldigen Dienstenutzung registrieren.

### Schritt 3: POI-Routenausgabe

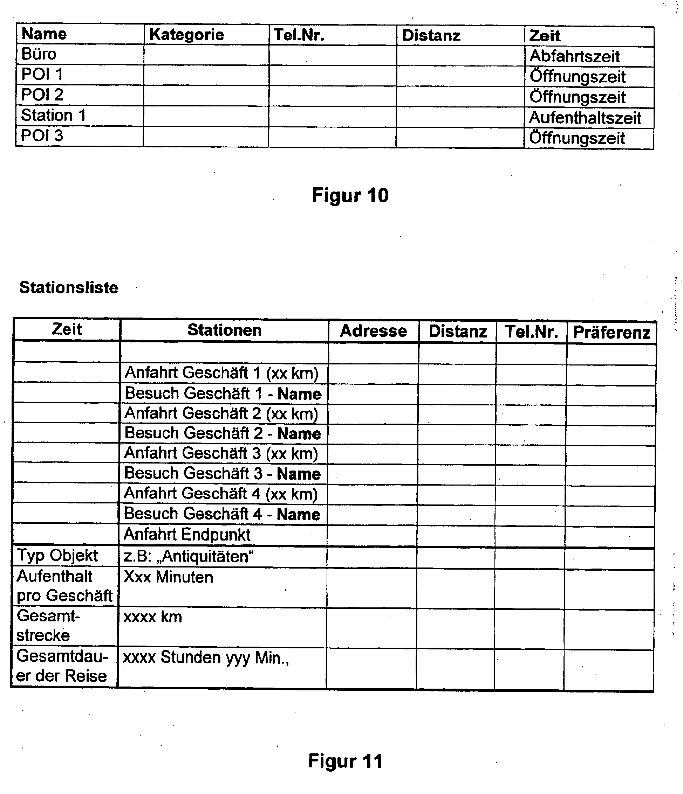

Eine POI-Routenausgabe ist nur bei einer vorher definierten Route möglich. Es erscheint die Liste gemäß Figur 10. Die POIs sind nach ihrer Distanz sortiert, ausgehend vom vorherigen Ausgangspunkt.

Im Feld "Kategorie" in Figur 10 erscheint ein zusammengesetzter Name wie z.B. "Fun-Freizeit" oder "Culture - Kunst". Das Feld "Distanz" bezeichnet den Abstand (Luftlinie) vom vorherigen Ausgangspunkt (z.B.: Startpunkt/Büro, Station 1, 2, 3).

Hier hat der Kunde nun das folgende Menü:
- Button: "POI-Route anzeigen" erzeugt eine Landkarte mit der hervorgehobenen Route und mit Icons für die herausgesuchten POIs;
- Button: "POI-Route bestätigen" Starten des Dienstes;
- Button: "Zurück" Rücksprung zur Eingangsmaske des Dienstes.

### Schritt 4: POI-Routenbestätigung

Wenn der Kunde den Button "POI-Route bestätigen" wählt, so teilt er dem VT-Center mit, dass er für die Dienstenutzung innerhalb der nächsten XX Minuten bis zum angegebenen Dienstestart vorgehalten werden möchte. Nachfolgend wird auf einem neuen Bildschirm eingeblendet, dass die Reise um XX.XX h beginnen wird. Nach erneuter Bestätigung gelangt man wieder ins Hauptmenü.

### Schritt 5: Dienstebeginn

Der Kunde wird 5 Stationen anfahren, die bereits aus dem Beispiel für die "Dynamische Dienstreiseplanung" bekannt sind. Der Kunde steigt in sein Fahrzeug und aktiviert den "Perso Push-Dienst", dessen Hauptbildschirmmaske in Figur 17 dargestellt ist.

Hier öffnet sich das folgende Menü:
- Anzeige: "Gewählte Kategorien";
- Button: "POI-Route anzeigen";
- Button: "POI-Tour starten" und nachfolgender Rücksprung ins Hauptmenü;
- Button: "Zurück".

### Schritt 6: Dynamische Routenführung

Siehe dynamische Dienstreiseplanung. Während der Fahrt ist der Navigationsmodus aktiv. Der einzelne Dienstemodus lässt sich durch Anwahl über das Hauptmenü anzeigen.

### Schritt 7: Spontane Nachricht

In der Regel kennt das VT-Center die geographische Position des Kunden durch laufende Meldungen während der Fahrt (z.B. im 15 Minuten Rhythmus). Dies können insbesondere Anfragen des Navigationssystems durch die laufende Dynamische Zielführung sein. Bei einer definierten Route können bei Fahrtbeginn alle POIs heruntergeladen werden. Sie werden zur Anzeige gebracht, wenn der Kunde sich bis auf x Kilometer (vom Kunden wählbar) an das Objekt angenähert hat. Bei einer nicht definierten Route wird die Info-Push-Nachricht unmittelbar nach Absetzen der Positionsmeldung aus der regelmäßigen Meldung an den Kunden übertragen. Hierbei kann man den Umkreis um die Position so bemessen, dass er bis zur nächsten Anfrage dort nicht herausfahren kann. Man überträgt alle POIs aus dem Suchkreis und bringt sie dann zur Anzeige, wenn der Kunde sich bis auf x Kilometer (vom Kunden wählbar) angenähert hat.

Wenn der Kunde eine spontane Benachrichtigung erhält, so wird sie per Text und per Voice-Kommando dargestellt. Die spontane Anzeige hat Priorität, zuvor ist im EG-Display das Hauptmenü zu sehen.
Anzeige: "In 4 km in Nord-Östlicher Richtung bzw. in Fahrtrichtung schräg rechts voraus "Sport" (etc.) Tel.Nummer: xxxx YYYYYYYYY."
Voice: "Hallo! In Fahrtrichtung rechts von Ihrem Fahrzeug befindet sich ein von Ihnen gewünschtes Objekt der Rubrik: "Sport, etc. (siehe unter Dienstebeginn)". Möchten Sie dort anrufen!

Nun gibt es die folgenden Optionen:
- Wenn der Kunde auf den Button für die "POI-Anrufen" drückt, so baut das EG einen Call zur angegebenen Rufnummer des Objektes auf.
- Wenn er "POI anfahren" drückt, so wird die Position des POI in die Routenplanung übernommen. Das EG erfragt automatisch eine dynamische Route zum Ziel.
- Wenn er "Weiter" drückt, so kommt er zurück ins Hautmenü.

### Schritt 8: Diensteende

Siehe vorherigen Abschnitt "Dynamische Dienstreiseplanung".

### Dienst: Intelligent Yellow Pages (Intelligente Gelbe Seiten)

### Beschreibung

Dieser Dienst ermöglicht das gezielte Anfahren von Objekten/Geschäften gemäß bestimmter Suchstrategien, nachdem der Kunde vorher ein/en unspezifisches/n Interesse/Einkaufsbedarf und die ihm zur Verfügung stehende Zeit geäußert hat

Der Produktnutzen für diesen Dienst besteht in den folgenden Punkten:
- Umsetzen von unspezifischen Interessen/Einkaufswünschen in konkrete POIs/ Geschäftskategorien.
- Berücksichtigung des Zeitbudgets eines Kunden.
- Routenoptimierung, sprich: kein unnutzes Umherfahren.
- Dynamische Zielführung.

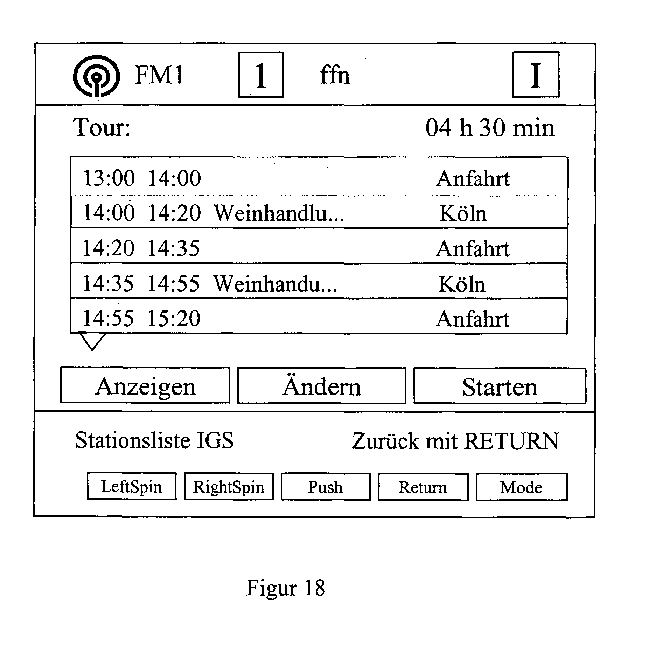

Eine typische Bildschirmmaske dieses Dienstes ist in Figur 18 dargestellt.

Beispiel 1: Ein Kunde möchte den Samstag für Einkäufe nutzen und steigt in sein Auto ein. Er hat einen gewissen (unspezifischen) Einkaufsbedarf, den er dem VT-Center mitteilt. Er möchte z.B. eine englische Chippendale-Kommode kaufen. Er ist bereit dafür 3 Stunden an Zeit zu investieren, Fahrtbeginn ist sofort nach Vorschlag des VT-Centers. Das VT-Center sucht alle Antiquitäten-Geschäfte in der Nähe heraus, die man in 3 Stunden anfahren kann. Es ist auch möglich, eine Broadcast-Anfrage per Fax an alle in Frage kommender Geschäfte zu richten und sie zu bitten, entsprechende Angebote an das VT-Center per E-Mail bis zu einem bestimmten Zeitpunkt zurückzusenden.

Diese Liste wird dem Kunden mit beiliegender Telefonliste zugestellt. Der Kunde kann daraufhin die Läden anrufen, um festzustellen, ob sie eine oder mehrere Kommoden im Angebot haben. Der Kunde kann daraufhin die Liste modifizieren, indem er Geschäfte von dieser streicht oder in der Reihenfolge gemäß der telefonischen Infos umstellt. Daraufhin wird dem Kunden nach entsprechenden Berechnungen die endgültige Liste zugestellt, die er bestätigt (vgl. Figur 18).

Während der Fahrt wird ihm mitgeteilt, dass zwischen Geschäft 3 und 4 ein Stau auf der Originalroute ist, so dass er nun über eine Umfahrung gelotst wird.

Bei diesem Dienst kann er auf den gleichen Datenbestand zurückgreifen wie bei den "Personalisierten Info-Push-Diensten".

Beispiel 2: Der Kunde will zwischen Geschäftsterminen bzw. am Wochenende diverse Erledigungen vornehmen und nutzt daher die "Intelligent Yellow Pages", um zielstrebig ein passendes Geschäft dynamisch in die vorhandene Fahrroute einzubinden bzw. anzufahren. Dabei genügt ein entsprechendes Schlagwort, und die Position, Öffnungszeiten, Telefonnummer, etc. des Geschäfts ist bekannt.

### Schritt 1 a:Routeneingabe - zu Hause am PC

Nach dem Einloggen am PC wählt der Kunde den Dienst "Intelligente Gelbe Seiten". Dort erhält er eine Eingabe-Maske, in der die folgenden Punkte einzutragen sind:
A. Bedarf (Was?)
   Shopping: Hier kann man alle möglichen Gegenstände, Artikel, Produkte usw. eingeben. Diese werden dann den entsprechenden Geschäften zugeordnet.
   Fun, Wining&Dining, Culture: Hier kann kein Artikel eingegeben werden, sondern nur die Kategorie bzw. das Item.
B. Anzahl Objekte/Geschäfte (Zeit?)
   Selbsterklärend, parametrierbar von 1-10.
C. Zeitbudget (Zeit?)
   Anstatt 2. (Berücksichtigung des Zeitbudgets) kann der Kunde auch eintragen, wie viel Zeit er in die Beschaffung des Gegenstandes investieren möchte.
D. Geschätzte Aufenthaltsdauer pro Objekt/Geschäft (Zeit?)
   Dies wird für die Routenplanung berücksichtigt. Parametrierbar in 5 Minutenschritten.
E. Startzeit (Zeit?)
   Hier kann der Kunde zwischen den folgenden Optionen wählen:
   - sofort
   - Datum, Uhrzeit für Beginn und Ende sowie Periodizität (mit entsprechender Eingabemaske)
F. Startpunkt
   Hier gibt es die Optionen: Zu Hause und Büro bzw. Adresse 1, 5.
G. Suchstrategie
   Siehe Routenberechnung

Unter dieser Maske befinden sich das folgende Menü:
- Button: "Tour berechnen"; siehe nachfolgend "Routenberechnung";
- Button: "Zurück" führt zu einem Rücksprung zum Hauptmenü.

### Schritt 1b:Routeneingabe - Operator

■ Der Kunde wählt durch den Dreh-Drück-Steller die Option für "Intelligent Yellow Pages" aus dem Hauptmenü aus und aktiviert diesen durch Drücken des Enter-Knopfes. wonach das Untermenü erscheint:
   - Operator
   - Manuell
■ Der Kunde wählt "Operator" aus, worauf das EG einen Sprachcall zum VT-Center aufbaut. Auf dem Bildschirm erscheint:
   Text: "Intelligent Yellow Pages aktiv". Diese Anzeige bleibt aktiv, bis dass eine Route vom VT-Center gesendet wird.
■ Der Kunde wird vom Operator sofort erkannt und persönlich begrüßt. Der Operator fragt,
   - Nach der Art des Bedarfes;
   - Nach der zur Verfügung stehender Zeit;
   - Nach der geschätzten Aufenthaltsdauer pro Geschäft;
   - Gewünschten Endpunkt der Einkaufstour;
■ Der Kunde macht die entsprechenden Angaben.

### Schritt 2: Routenberechnung

Bei der Routenberechnung wird die aktuelle und die prognostizierte Verkehrslage miteinbezogen.

Der Rechenalgorithmus kann die folgenden Strategien verfolgen:
- Umkreisstrategie: Ziehe sukzessive Kreise um den Standort des Kunden bis das die gewünschte Anzahl von Geschäfte erreicht ist. Dies kann der Kunde nutzen, um zu sehen, was für Geschäfte in seiner Nähe sind. Es ist dann aber nicht notwendigerweise wegeoptimal, diese Geschäfte im Rahmen einer Tour anzufahren.
- Kuchenstückstrategie: Spanne 8 "Kuchenstücke" mit einem Öffnungswinkel von 90 Grad und einem Ursprung am Standort des Kunden auf. Spanne zusätzlich einen kleinen (tbd) Kreis um den Standort. Die Mittelsenkrechte eines Kuchenstückes entspricht den 8 Richtungen der Windrose. Der Radius ist doppelt so lang zu wählen, wie der Radius aus der Kreisstrategie. Wähle dann das Kuchenstück aus, bei dem die X Geschäfte mit dem kürzesten Radius erreicht werden.
- Kombinatorik: Wähle aus einer (geographisch eingegrenzten) Grundgesamtheit von Objekten alle x-Tupel heraus (x = Anzahl der gewünschten Geschäfte) und berechne die Fahrtstrecke für alle Permutationen, beginnend am Standort des Kunden über alle x Stationen und endend wieder am Standort. Dies ist die mathematisch vollständige Lösung.
- Produktpreis: Suche X Geschäfte heraus, bei denen das billigste (für einen Artikel oder den Warenkorb) an erster Stelle steht und suche dann die entsprechende Route zwischen diesen X Geschäften und dem Ausgangs- bzw. Endpunkt mittels des TSM-Algorithmus.
- Fachgeschäft/Qualität: Bevorzuge Geschäfte, die ein Fachgeschäft für einen Artikel sind. Beispiel: Wenn man einen Anzug kaufen will, so bevorzuge Herrenausstatter vor Supermarkt.
- Ansammlung: Versuche die Gegenstände in möglichst wenig Geschäften zu kaufen.

### Schritt 3a:Routenausgabe am PC:

Der Kunde erhält nach Eingabe der Parameter und Routenberechnung eine Stationsliste gemäß Figur 11.

Das obige Beispiel ist für die Anfahrt von mehreren Geschäften (ins. im Bereich Shopping gedacht). Sie erfolgt bei der Auswahl der Strategie "Kuchenstück". Bei der Strategie "Umkreis" werden nur die gefundenen Objekte aufgeführt; das Auflisten der Anfahrt entfällt. Durch Angabe der Präferenz kann angegeben werden, ob man ein oder mehrere Objekte anfahren will.

Weiterhin hat der Kunde die Möglichkeit, mit einem Eintrag aus der Stationsliste eine Telefonnummer anzuwählen. Wenn sich im Gespräch mit dem Geschäft herausstellt, dass es nicht den gewünschten Gegenstand/Dienstleistung zur Verfügung hat, so kann der Kunde das Objekt/Geschäft aus der Stationsliste entsprechend priorisieren oder gar löschen.

### Schritt 3b: Routenausgabe Operator

Der Operator wird dem Kunden nach erfolgter Berechnung mitteilen, dass er ein Ergebnis erzielt hat und fragt den Kunden, ob er es ihm vorlesen soll, so dass man Online Modifikationen vornehmen kann. Hierbei ist kein Anruf bei einem Geschäft vorgesehen. Es können lediglich Geschäfte aus der Liste gelöscht werden oder die Aufenthaltsdauer in den Geschäften verändert werden. Im Gespräch können Kunde und Operator vereinbaren, dass der Operator eine Stationsliste mit den jeweiligen Modifikationen in das EG schickt. Dies kann sich mehrmals wiederholen, bis dass der Kunde das Gespräch mit dem Operator beendet. Der Kunde kann dann eine dynamische Routenführung mit dem vorhandenen Datenbestand aus der vorliegenden Stationsliste starten oder die Liste noch weiter modifizieren und danach als endgültig an das VT-Center melden.

Parallel zum Dialog wird nach Erstberechnung und jedem weiteren Zwischenschritt eine Message an das Fahrzeug geschickt, in dem das Ergebnis in Form einer Stationsliste aufgeführt ist. Der Bildschirm enthält die entsprechenden Inhalte. Wenn die Anzahl der Stationen so groß ist, dass sie sich nicht mehr auf einem Bildschirm darstellen lässt, so ist eine Scroll-Funktion vorhanden.

### Schritt 4:Routenbestätigung

Hier hat der Kunde nun das folgende Menü:
- Button: "Tour neu berechnen", anzuwenden nach Priorisierung. Ergebnis ist eine geänderte Stationsliste
- Button: "Tour anzeigen" die Objekte/Geschäfte auf seiner Route sind auf einer Landkarte zu betrachten.
- Button: "Route bestätigen" der Dienst wird gestartet, Kunde wird vorgemerkt.
- Button: "Zurück" Rückkehr zur Eingangsmaske des Dienstes.

Wenn er den Button "Route bestätigen" wählt, so wird nachfolgend auf einem neuen Bildschirm eingeblendet, dass die Reise um XX.XX h beginnen wird. Nach erneuter Bestätigung gelangt man wieder ins Hauptmenü.

### Schritt 5a: Routenbeginn

Kunde steigt in sein Fahrzeug, aktiviert das VT-System durch den Zündschlüssel und wählt aus dem Hauptmenü (Figur 15) den Punkt "Intelligent Yellow Pages". Daraufhin wird dem Kunden vom VT-Center die Route heruntergeladen und die Fahrt kann beginnen.

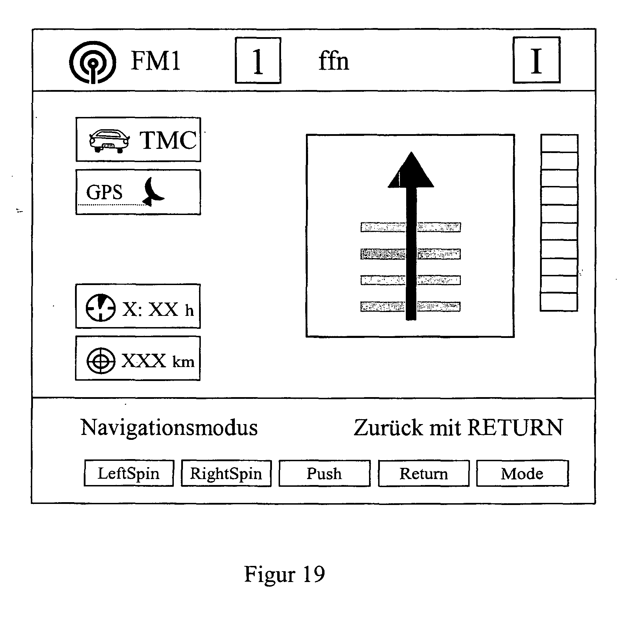

Hier öffnet sich das folgende Menü gemäss Figur 18):
- Anzeige: Gewählte Kategorien, Gesamttourdauer, Gesamttourlänge und das nächste Objekt/Geschäft (Name, Adresse, Entfernung, Fahrtzeit). Diese Anzeige erscheint X Sekunden, wonach der Navigationsmodus (Figur 19) erscheint. Sie lässt sich wieder aufrufen, indem man zuerst ins Hauptmenü geht und dann auf "Intelligent Yellow Pages". Sie bleibt dann solange sichtbar, bis dass der Kunde "zurück" wählt.
- Button: "Tour listen." Die Stationsliste erscheint in Tabellenform. Hier besteht dann die Möglichkeit, einzelne Objekte/Geschäfte anzurufen.
- Button: "Tour anzeigen." Die Stationsliste erscheint als Kartendarstellung
- Button: "Tour starten" und nachfolgender Rücksprung ins Hauptmenü (wird danach inaktiv bei laufendem Dienst)
- Button: "Tour vorzeitig beenden." Es wird eine Zielführung zum Endpunkt eingeleitet.
- Button: "Zurück." Es folgt ein Rücksprung ins Hauptmenü.

Wenn der Kunde aus einem Geschäft wieder in sein Fahrzeug steigt, so sollte der obige Bildschirm mit seinen Buttons wieder erscheinen.

### Schritt 5b: Routenbeginn mit Operator

Nach Abschluss des Editierens am EG kann der Kunde den Dienst weiterführen durch Anklicken einer der Buttons:
- "Stationsliste bestätigen, Start Dynamische Routenführung sofort";
- "Stationsliste bestätigen, Start Dynamische Routenführung später" (wonach in einem Eingabefeld die Optionen für den gewünschten Startzeitpunkt eingetragen werden können.).

Danach erfolgt jeweils ein Rücksprung ins Hauptmenü, wo aber vermerkt sein sollte, dass dieser Dienst aktiv ist (z. B.: durch farbliche Unterlegung). Jederzeit muss es dem Kunden möglich sein, den Dienst abzubrechen. Dies führt zu einem Rücksprung in das Hauptmenü.

Als zweite Möglichkeit kann der Kunde im Gespräch mit dem Operator bestätigen, dass die Stationsliste in Ordnung ist und das die Dynamische Routenführung beginnen kann. Das VT-Center sendet einen entsprechenden Befehl an das EG.

### Schritt 6:Dynamische Routenführung

Siehe dynamische Dienstreiseplanung. Während der Fahrt ist der Navigationsmodus aktiv, wobei auf dem Bildschirm eine Anzeige gemäß Figur 19 erscheint. Der einzelne Dienstemodus lässt sich durch Anwahl über das Hauptmenü anzeigen.

### Schritt 7: Benachrichtigungen in Stationen

Der Kunde erhält einen Anruf oder SMS vom VT-Center, wenn er sich mutmaßlich in einem Geschäft aufhält, dass es Zeit wird, die nächste Station anzufahren. Die Benachrichtigungen werden dynamisch angepasst, in Abhängigkeit von der aktuellen Ankunftszeit bei einer Station.

### Schritt 8: Vorzeitige Rückfahrt

Wenn ein Kunde in einem Geschäft vor Beendigung der Route den passenden Einkaufsgegenstand gefunden hat, so kann er durch Betätigen des Buttons "Vorzeitige Rückfahrt" vom VT-Center eine Route für die Heimfahrt zu seinem Ausgangspunkt anfragen.

### Schritt 9: Routenende

siehe Dynamische Dienstreiseplanung

### Weitere Dienste: Einbeziehung der Standarddienste

Bei der jetzigen Telematik stehen in der Regel die folgenden Dienste einem Kunden zur Verfügung:
- Notruf
- Pannenmeldung
- Verkehrsinformation oder
- Dynamische Zielführung

Diese Dienste werden durch eine Kombination von bekannten Endgeräten für die Navigation in Verbindung mit einem GATS-basierten VT-Center für einen Kunden erbracht. Es steht eine Benutzeroberfläche zur Verfügung, die über Schnittstellen angesteuert wird.

### Allgemeine Anforderungen an die Endgeräte

Die Figuren 12 bis 14 zeigen die wesentlichen für die Durchführung des Verfahrens erforderlichen Komponenten

Als Endgeräte werden verwendet:
- Bildschirmnavigationssystem 7 neuster Generation 'D'
- Bordcomputer 10 als Personal Computer mit Software

### Updatefähigkeit:

Das Navigationssystem 7 ist grundsätzlich updatefähig. Für den Demonstrator sind keine weiteren speziellen Update-Mechanismen geplant.

### Lokalisierung:

Die Navigation besitzt eine GPS-Versorgung zur Lokalisierung des Fahrzeugs 6.

Wechselbeziehungen zwischen einzelnen Diensten:
- Der Perso-Push-Service führt u.u. zu Routen- und Zeitplanänderungen beim Dienstreise-Service oder beim 'Yellow'-Page-Service.
- Übernahme der geographischen Position eines POIs in die Navigation.

### Kommunikation:

Die Ansteuerung der Navigation erfolgt über:
- Audio In (zur Ausgabe über die Fahrzeuglautsprecher),
- Video In (FBAS-Eingang),
- CAN-Bus 11.

'Audio In' dient der Sprachausgabe; über 'Video In' können beliebige Bilder auf dem Display 8 der Navigation 7 angezeigt werden. Über den CAN-Bus 11 sollen Tastenbetätigungen vom Kunden, die er am Tastenfeld 9 (Man-Machine-Interface) vornimmt, signalisiert werden. Gleichzeitig soll es die Möglichkeit geben, bestimmte Funktionalitäten der Navigation über den CAN-Bus 11 zu steuern.

'Events', die die Navigation anderen Geräten über CAN signalisieren soll:
- Betätigung des Dreh-Drück-Stellers
- Betätigung der 'Return'-Taste
- Betätigung der 'Info'-Taste
   - Betätigung einer 'Mode'-Taste, mit der es möglich sein soll zwischen den Standardfunktionalitäten der Navigation und den Funktionalitäten des Routenplaners und Routenführers hin- und herzuschalten.

Zusätzlich ist erforderlich, dass die Navigation bei Wahl des Routenplaners und Routenführers über die 'Mode'-Taste automatisch beginnt, 'Audio In' und 'Video In' auszuwerten.

Auf diese Weise soll es möglich sein, mit Hilfe des Bordrechners 10, der über eine CAN-Schnittstelle, einen FBAS-Ausgang und eine Soundkarte verfügt, bei der Anwahl des Routenplaners und Routenführers über die 'Mode-Taste', die Menüstruktur auf dem Display 8 der Navigation 7 darzustellen, Klänge über das Soundsystem des Fahrzeugs auszugeben und Benutzerinteraktionen auszuwerten. Abhängig von diesen Benutzerinteraktionen soll der Bordrechner 10 dann die einzelnen Anzeigen des Menübaums auf dem Display 8 der Navigation 7 verändern und - falls beim entsprechenden Menü erforderlich - auch Klänge ausgeben.

### Medien/Schnittstellen:

Das fahrzeugseitige System besteht:
- aus dem Navigationssystem 7, mit dessen Hilfe eine komfortable Anzeige und Menüführung ermöglicht werden. Über den in der Navigation vorhandenen Audio-Teil besteht zusätzlich die Möglichkeit einer Audio-Ausgabe im Fahrzeug.
- aus dem Bordrechner 10, der die über die Navigation 7 vom Benutzer gemachten Eingaben auswertet und daraufhin Aktionen (wie beispielsweise eine Diensteanfrage oder die Darstellung eines neuen Bildschirmmenüs) einleitet.

### Protokoll:

Zwischen Navigationssystem 7 und dem Bordrechner 10 besteht eine 100Kbit/s CAN (Controller Area Network)-Verbindung 11. Für die Ausgabe von Geräuschen existiert ein Audio-Eingang. Bilder können über einen FBAS-Anschluß dargestellt werden.

Man-Machine-Interface 9 (MMI) im Fahrzeug enthält z.B.

### Eingabeeinheiten

- Dreh-Drück-Steller
- Mode-Taste
- Return-Taste
- Info-Taste

### Bildschirm

Als Bildschirm 8 ist ein Graphik-Display mit 320x200 Farbpixel und 5 Zoll Diagonale vorgesehen

### Sprachausgabe

Die Sprachausgabe erfolgt mit Hilfe der Navigation über die Fahrzeuglautsprecher.

### Beschreibung der Anforderungen an die VT-Zentrale 12:

In diesem Abschnitt werden verschiedene Merkmale der Zentrale 12 beschreiben, die sie in ihrer Umsetzung zu erbringen hat.

### Zentralenarchitektur:

Wie man aus Figur 12 entnehmen kann, ist die Zentrale 12 mit dem Bordrechner 10 des Autos 6, einem Videoscreen 8, dem PC 13 und wahlweise mit dem Internet 14, bzw. einer Datenbank 15 verbunden.

Die Zentrale 12 benötigt umfangreiche Daten für die Erbringung der Dienste, wie z.B. geographische Daten, Daten über Sehenswürdigkeiten, Daten aus den "Gelben Seiten" etc. Aus welcher Quelle die Daten für die Zentrale kommen, z.B. aus dem Internet 14 oder einer Datenbank 15, ist flexibel.

Die Ein-/Ausgabe von Daten erfolgt mittels eines spezifischen Endgeräts 33 und eines Standard-Mobiltelefons 34. Die entsprechenden Soft-/Hardwarekomponenten zur Aufbereitung und Anpassung der Daten an diese Endgeräte werden in der Zentrale 12 installiert.

Der Bordrechner 10 des Fahrzeugs 6 ist das Bindeglied zwischen dem spezifischen Endgerät 7 (Display 8) und der Zentrale 12. Die Kommunikation zwischen dem Bordrechner 10 und der Zentrale 12 erfolgt idealerweise per GSM 17 (TCP/IP-Verbindung).

Display 8 und Bordcomputer 10 sind über den CAN-Bus 11 miteinander verbunden. Der Bordcomputer 10 empfängt Signale über Benutzereingaben vom Man-Machine-Interface 9 und ist verantwortlich für die Übermittlung der grafischen Daten an den Bildschirm 8. Die Zentrale 12 ist weiterhin in der Lage Kurzmitteilungen per SMS zu versenden.

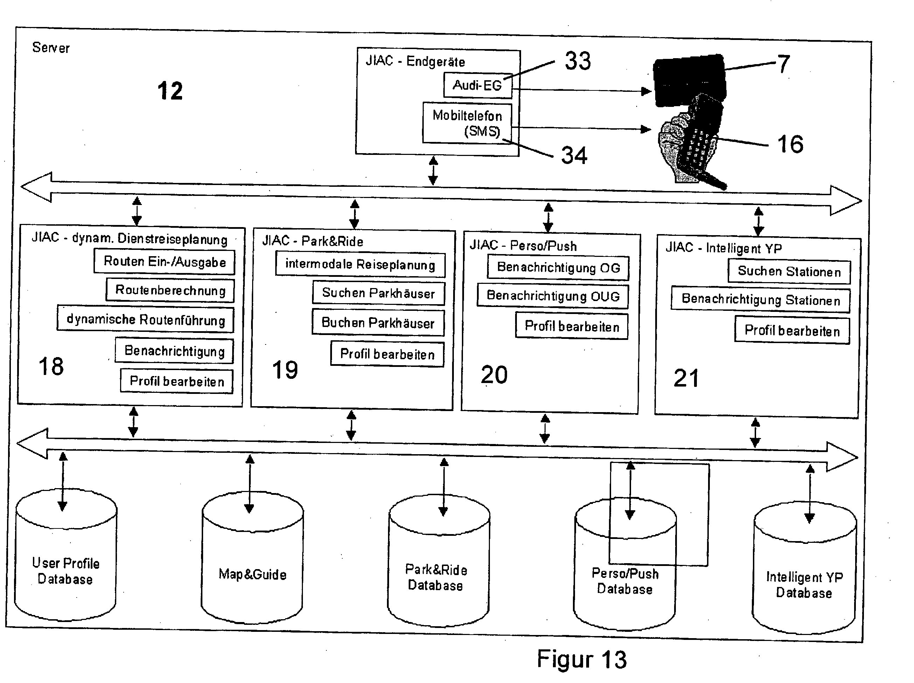

Die Funktion der Zentrale 12 wird in Form eines Servers realisiert. Dieser Server beherbergt alle Softwarekomponenten, die zur Demonstration der vorgesehenen Dienste benötigt werden. Die Figur 13 zeigt den Aufbau eines derartigen Servers 12 mit den installierten Diensteplattformen 18-21.

### Abzubildende Dienste:

### Allgemein

Pro Dienst wird eine Diensteplattform 18-21 bereitgestellt, die alle auf dem Server laufen. Auf jeder Plattform werden mehrere Content Provider Agenten/Verfahren laufen, die den anderen Agenten/Verfahren Zugriff auf die Contentdaten ermöglichen.

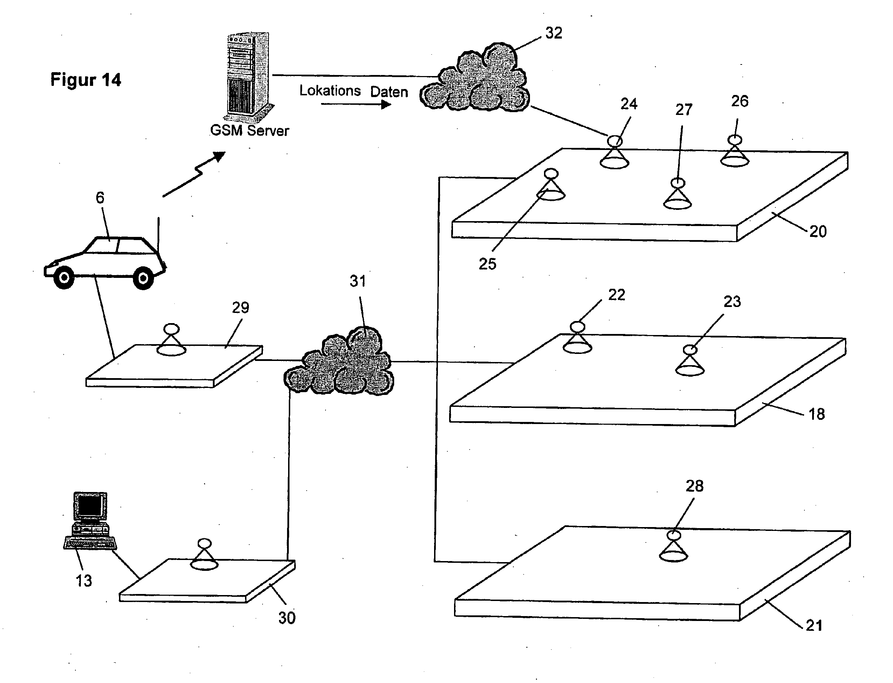

Auf dem Server werden mindestens drei Dienstplattformen 18, 20, 21 laufen, und jeweils eine Diensteplattform 29 bzw. 30 auf dem Personal Computer 13 und auf dem Bordrechner 10. Dies ist in den Figuren 13 und 14 dargestellt.

Auf der Plattform der Dynamischen Dienstreiseplanung 18 wird es einen Agenten / ein Verfahren 22 für die Routenplanung und einen für den Kalenderdienst 23 geben. Der Routenplaner 22 nimmt den Kalender des Kalender-Agenten/-Verfahrens 23 als Input für die Routenplanung.

Die Plattform für die Perso/Push Infodienste 20 benötigt ein(en) Verfolgungs-Agenten/- Verfahren 24, der den Aufenthaltsort des Benutzermobiltelefons überwacht. Diese Lokalisierung erfolgt in der Regel über die im Fahrzeug vorhandenen Technologien, sprich: GPS. Der Push Agent/ das Push-Verfahren 25 sendet in Abhängigkeit von den Präferenzen und dem Aufenthaltsort des Benutzers relevante Daten an das Endgerät 10. Die erforderlichen Daten werden dem Push Agenten/-Verfahren 25 von mehreren Content-Provider-Agenten/-Verfahren 26, 27 zur Verfügung gestellt.

Auf der Intelligent YP Plattform 21 existiert ein Agent/Verfahren 28 der die Contentdaten zur Verfügung stellt. Diese werden bei Bedarf abgefragt und der Routenplanung übergeben.

Die Dienstnutzung wird durch ein(en) GUI Agenten/-Verfahren 29 (GUI: Graphical User Interface) realisiert, der die Benutzereingaben entgegennimmt, verarbeitet, und dem Server 12 übermittelt. Alle Ergebnisse vom Server 12 werden dem GUI Agenten/ das GUI-Verfahren 29 übermittelt, der diese Daten dem Benutzer zur Verfügung stellt.

### Wechselbeziehungen zwischen einzelnen Diensten:

Die Dienste sind so aufgebaut, dass eine Kooperation/Kommunikation der Dienste untereinander möglich ist. So kann, z.B. der "Intelligent YP"-Dienst 21 auf Funktionalitäten der "Dynamischen Dienstreiseplanung 18" zurückgreifen.

In einem solchen Fall kommunizieren die entsprechenden Agenten 22, 23, 28 der unterschiedlichen Plattformen miteinander, um diesen Dienst zu erbringen.

### Kommunikation:

### Medien/Schnittstellen

Die Ein-/Ausgabe von Daten erfolgt mittels des spezifischen Endgeräts 7und eines Standard-Mobiltelefons 16. Über das Mobiltelefon werden per SMS Benachrichtigungen an den Nutzer geschickt, die Kommunikation zwischen dem spezifischen Endgerät 7 und dem Bordrechner 10 erfolgt über den CAN-Bus 11. Der Bordrechner 10 kommuniziert mit dem Server 12 (Zentrale) über GSM Verbindung 17 mittels TCP/IP.

### Protokoll:

Folgende Protokolle und Standards werden benötigt, um auf die Hardware im Fahrzeug zugreifen zu können:
- CAN-Protokoll
- TCP/IP
- Netzte: GSM
- GPS

### Hardwareanforderungen:

- Server 12: PC, mindestens ein Pentium 2 300 MHz, mit 128 MB Hauptspeicher; Betriebssystem NT 4.0
- Bordrechner10: abhängig von der Schnittstelle zum Fahrzeug (sollte aber ausreichend leistungsfähig sein; Java-fähiges Betriebssystem

Bei synchroner Dienstnutzung muss der Benutzer auf das Ergebnis eines erteilten Auftrags warten und kann in der Zwischenzeit keine weiteren Aufträge herausgeben.

Bei asynchroner Dienstnutzung ist eine Erteilung weiterer Aufträge möglich, d.h. der Server muss hier in der Lage sein während der Bearbeitung einer Aufgabe weitere entgegennehmen zu können.

### Diensteinhalt/Content:

- Es wird einen Client für die Nutzung von Diensten geben.
- Der Client kann Benutzereinstellungen in einem Profile erfassen und auf dem Server speichern.
- Dienste sind dynamisch auswählbar.

Für die geographischen Daten steht uns schon ein entsprechender Dienst zur Verfügung.

Für die Dienste Perso/Push 20 und Intelligent YP 21 stehen Datenquellen namhafter Anbieter (bspw. Gräfe&Unzer) bereit. Weiterhin sind GPS Daten, GSM Daten und Zelleninformationen über eine mögliche simulierte Bewegung des Fahrzeugs 6 nötig.

### Ansteuerung weiterer Endgeräte (Handy, PC, PDA, etc.):

Der Server muss gemäß obiger Architekturübersicht in der Lage sein, neben dem Bordrechner 10 auch noch den PC 13 und Handy 16 anzusteuern.

### Bezugszeichenliste

- 1: Station
- 2: Station
- 3: Station
- 4: Station
- 5: Station
- 6: Fahrzeug
- 7: Navigationssystem
- 8: Bildschirm
- 9: Man-Machine-Interface
- 10: Bordcomputer
- 11: CAN-Bus
- 12: VT-Zentrale (Server)
- 13: Personal Computer
- 14: Internet
- 15: Datenbank
- 16: Mobiltelefon
- 17: GSM-Verbindung
- 18: Diensteplattform (Dynamische Dienstreiseplanung)
- 19: Diensteplattform (Perso/Push Infodienste)
- 20: Diensteplattform (Intelligent YP)
- 21: Diensteplattform (Park & Ride)
- 22: Routenplaner Agent
- 23: Kalender Agent
- 24: Verfolgungs Agent
- 25: Push Agent
- 26: Content Agent
- 27: Content Agent
- 28: YP Agent
- 29: GUI Agent
- 30: GUI Agent
- 31: Kommunikationsnetzwerk
- 32: Kommunikationsnetzwerk
- 33: Endgerät
- 34: Mobiltelefon

## Patentansprüche

1. Verfahren zur computerunterstützten Reiseroutenplanung und Reisedurchführung, wobei mit Hilfe vorgegebener Reisedaten und aktuelle Verkehrsmeldungen eine erste Reiseroute bestimmt wird,
wobei unter Berücksichtigung aktueller Verkehrsdaten und neuen Eingabedaten des Reisenden die Reiseroutenplanung laufend der Verkehrssituation und den geänderten Reisedaten angepasst wird und eine geänderte Reiseroute auf einem bekannten Navigationssystem ausgegeben wird, und
wobei nach Bestätigung der Reiserouten fortlaufend Navigationshinweise sowohl mittels Sprachausgabe als auch visuell erfolgen,
**dadurch gekennzeichnet,**
**dass** es eine dynamische Reiseroutenplanung bereitstellt, die anhand einer Terminplanung einer Person eine mehrere Stationen umfassende Reiseroute zur Wahrnehmung der Termine plant, im Hinblick auf die Verkehrssituation koordiniert und die Person mittels einer dynamischen Zielführung zu den jeweiligen den Terminen zugeordneten Stationen führt.

2. Verfahren nach Anspruch 1, **dadurch gekennzeichnet,**
**dass** Hinweise über Reisebeginn mittels eines Mobil- oder eines Festnetztelefons erfolgen.

3. Verfahren nach Anspruch 1 oder 2, **dadurch gekennzeichnet,**
**dass** die Reiseroutenplanung sowohl interaktiv über einen PC als auch im Dialog über einen Operator erfolgt.

4. Verfahren nach einem der vorhergehenden Ansprüche, **dadurch gekennzeichnet,**
**dass** es zusätzlich zur dynamischen Reiseroutenplanung, einen personalisierten Informations-Push Dienst, Intelligente Gelbe Seiten, Verkehrsinformationen und eine dynamische Zielführung als eigenständige, beliebig miteinander kombinierbare Dienste bereitstellt.

5. Verfahren nach Anspruch 4, **dadurch gekennzeichnet,**
**dass** der personalisierte Informations-Push Dienst einer Person orts- und situationsbezogene Informationen über ihr Umfeld oder diverse Points of Interest (POI) unter Berücksichtigung ihrer persönlichen Interessen bereitstellt.

6. Verfahren nach Anspruch 5, **dadurch gekennzeichnet,**
**dass** nach dem Erhalt der Informationen eine dynamische Zielführung zum gewählten POI erfolgt.

7. Verfahren nach Anspruch 4, **dadurch gekennzeichnet,**
**dass** anhand des Dienstes der Intelligenten Gelben Seiten ein gezieltes Anfahren von Objekten und Örtlichkeiten anhand bestimmter Suchstrategien und einem vorgegeben Zeitrahmen erfolgt.

## Claims

1. Method for computer-assisted itinerary planning and journey implementation,
wherein with the aid of preset journey data and traffic reports, a first relevant itinerary is determined, wherein taking into account relevant traffic data and new input data of the traveller, itinerary planning is constantly adapted to the traffic situation and the modified journey data, and a modified itinerary is given out on a known navigation system, and wherein after confirming the itineraries, navigation instructions ensue continually both by means of voice output and visually, **characterised in that** it provides dynamic itinerary planning which using schedule planning of a person plans, coordinates an itinerary comprising several stations with regard to the traffic situation to take into account the schedule and guides the person to the particular stations assigned to the schedule by means of dynamic destination guidance.

2. Method according to claim 1, **characterised in that** instructions about the start of the journey ensue by means of a mobile telephone or a fixed network telephone.

3. Method according to claim 1 or 2, **characterised in that** itinerary planning ensues both interactively via a PC and in dialogue with an operator.

4. Method according to one of the preceding claims, **characterised in that** it provides additionally for dynamic itinerary planning, a personalised information push service, intelligent yellow pages, traffic information and dynamic destination guidance as independent services which can be combined with one another randomly.

5. Method according to claim 4, **characterised in that** the personalised information push service of a person provides place-related and situation-related information about their area or diverse Points of Interest (POI) taking into account their personal interests.

6. Method according to claim 5, **characterised in that** after receiving the information, dynamic destination guidance to the selected POI ensues.

7. Method according to claim 4, **characterised in that** using the service of intelligent yellow pages, a well-targeted approach to objects and localities ensues using certain search strategies and a preset time frame.

## Revendications

1. Procédé pour la planification d'itinéraire et la réalisation d'un voyage assistées par ordinateur,
étant précisé qu'à l'aide de données de voyage prédéfinies et de messages de trafic actualisés, un premier itinéraire est défini,
qu'en tenant compte de données de trafic actualisées et de nouvelles données entrées par le voyageur, la planification d'itinéraire est adaptée en permanence à l'état du trafic et aux données de voyage modifiées, et qu'un itinéraire modifié est sorti sur un système de navigation connu, et
qu'après confirmation des itinéraires, des instructions de navigation sont données continuellement aussi bien à l'aide d'une sortie vocale que visuellement,
**caractérisé en ce qu'**il fournit une planification d'itinéraire dynamique qui, à l'aide d'un planning d'une personne, planifie et coordonne un itinéraire comprenant plusieurs stations compte tenu de l'état du trafic, pour se rendre aux rendez-vous, et guide la personne jusqu'aux stations affectées aux différents rendez-vous, à l'aide d'un guidage routier dynamique.

2. Procédé selon la revendication 1, **caractérisé en ce que** les instructions sur le début du voyage sont données à l'aide d'un téléphone mobile ou fixe.

3. Procédé selon la revendication 1 ou 2, **caractérisé en ce que** la planification d'itinéraire se fait aussi bien de manière interactive par l'intermédiaire d'un PC qu'en mode de dialogue par l'intermédiaire d'un opérateur.

4. Procédé selon l'une des revendications précédentes, **caractérisé en ce qu'**il fournit, en plus de la planification d'itinéraire dynamique, un service push d'information personnalisé, des pages jaunes intelligentes, des informations de trafic et un guidage routier dynamique sous la forme de services autonomes qui peuvent être combinés à volonté.

5. Procédé selon la revendication 4, **caractérisé en ce que** le service push d'information personnalisé fournit à une personne des informations de position et de situation sur son environnement ou sur différents points d'intérêt (POI) en tenant compte de ses centres d'intérêt personnels.

6. Procédé selon la revendication 5, **caractérisé en ce qu'**après réception des informations, un guidage routier dynamique jusqu'au POI choisi a lieu.

7. Procédé selon la revendication 4, **caractérisé en ce qu'**à l'aide du service des pages jaunes intelligentes, une approche ciblée d'objets et d'endroits a lieu à l'aide de stratégies de recherche définies et d'un créneau horaire prédéfini.
